# EUROPÄISCHE PATENTSCHRIFT

(11) **EP 0 990 665 B1**
(45) Veröffentlichungstag und Bekanntmachung des Hinweises auf die Patenterteilung: **01.10.2003**
(21) Anmeldenummer: 99117003.6
(22) Anmeldetag: 28.08.1999
(51) Int. Cl.: C08F 220/12, C08F 220/18, C09D 133/06

(54) **Polyacrylsäureester und ihre Verwendung als Entlüfter für Lacke und Farben**
Polymers of acrylic esters and their use as deaerator of varnishes and paints
Polymères d'esters acryliques et leur usage comme agent de désaération dans des vernis et des peintures

(30) Priorität: 11.09.1998 DE 19841559
(43) Veröffentlichungstag der Anmeldung: 05.04.2000
(73) Patentinhaber: Goldschmidt AG, 45127 Essen (DE)
(72) Erfinder: Dietz, Thomas, Dr., 45259 Essen (DE); Esselborn, Eberhard, 45147 Essen (DE); Psiorz, Christian, Dr., 45136 Essen (DE); Schick, Ute, Dr., 45307 Essen (DE); Silber, Stefan, Dr., 47804 Krefeld (DE); Wallhorn, Ellen, 45239 Essen (DE); Wolfgram, Dirk, 44879 Bochum (DE)

(56) Entgegenhaltungen:
- EP-A- 0 492 509

## Beschreibung

Die Erfindung betrifft durch Umesterung erhaltene Polyacrylsäureester mit (Meth)acryloxygruppen und deren Verwendung als Entlüfter für Lacke und Farben, insbesondere für strahlenhärtende Beschichtungen.

Es ist aus dem Stand der Technik bekannt, Polyacrylsäureester verschiedener Zusammensetzung als Entlüfter zu verwenden. Hierfür werden insbesondere Homopolymere des Butylacrylates sowie Copolymere aus Ethylacrylat und Ethylhexylacrylat verwendet. Als beispielhafte Anwendungsgebiete seien die Entlüftung von 2K-Epoxyfußbodenbeschichtungen (Pitture Vernici Eur. (1997), 73, 34-38) oder in Pulverlackaufbauten (u.a. EP-A-0 561 543) genannt. In vielen Fällen ist deren entlüftende Wirkung jedoch unzureichend.

Die Verwendung von hydrophoberen Polyacrylsäureestern mit höheren Alkylresten und/oder zusätzlichen (Meth)acryloxygruppen als Entlüfter für Lacke und Farben ist hingegen nicht beschrieben.

Die Erfindung betrifft die Verwendung solcher spezieller Polyacrylsäureester zur Entlüftung von Beschichtungen, insbesondere strahlenhärtender (UV/EB) Beschichtungen. Durch den Zusatz solcher Polyacrylsäureester lassen sich die in solchen Beschichtungen inkorporierten, grob- und feindispersen Luftblasen vermeiden, ohne daß andere Eigenschaften solcher Beschichtungen negativ beeinflußt werden.

Die zunehmenden Forderungen nach ökologisch unbedenklicheren, emissionsreduzierten und gleichzeitig ökonomisch verarbeitbaren Beschichtungssystemen brachten gerade die UVoder EB-induzierte Strahlenhärtung als junge Technologie in den Vordergrund. Systeme auf Basis radikalisch härtbarer Acrylester, auf die im folgenden noch eingegangen wird, haben hier die größte Bedeutung erlangt. Solche Systeme sind bekannt und beispielsweise in "UV and EB Curing Formulation for Printing Inks, Coatings and Paints" (R.Holeman, P.Oldring, London 1988) beschrieben.

Acrylat-Terpolymere mit (Meth) acryloxygruppen in den Seitenketten sind auch aus EP-A-0 492 509 bekannt.

Hauptbindemittel sind oligomere Acrylesterverbindungen auf Basis von Polyethern, Polyestern, Epoxidharzen oder Polyurethanen. Die mittleren Molmassen liegen üblicherweise im Bereich von 200 bis 4000 g/Mol. Durch den Zusatz niedrigviskoser mono- oder multifunktioneller Monomere, wie z. B. Hexandioldiacrylat, Tripropylenglycoldiacrylat, Trimethylolpropantriacrylat usw., die als Reaktivverdünner dienen, wird gegebenenfalls auf die gewünschte Verarbeitungsviskosität eingestellt. Der Härtungsmechanismus stellt eine strahlungsinduzierte, radikalische Polymerisation dar. Im Falle der UV-Härtung wird die Polymerisation durch die Photoreaktion eines Initiators eingeleitet. Beispiele solcher Photoinitiatoren sind Acylphosphinoxid-, Acetophenonoder Benzophenonderivate sowie Thioxanthone. Zur Beschleunigung werden manchmal Aminderivate als Synergisten zugesetzt. Nach Beschichtung, gewöhnlich über Gieß-, Walz- oder Spritzverfahren, und Bestrahlung mit UV-Licht oder Elektronenstrahlung können derart lackierte Materialien sofort weiterverarbeitet oder verpackt werden.

Ihre Herstellung und mehr noch ihre Verarbeitungseigenschaften sind ursächlich mit den eingesetzten Additiven verknüpft. Insbesondere die Entlüftung ist ein sehr kritisches Problem, da zwischen der Applikation und der sich anschließenden strahleninduzierten Trocknung nur wenige Sekunden vergehen. Häufig verbleiben daher fein dispergierte (5 bis 50 µm), sphärische Luftblasen im Film, was auch einen deutlichen Glanzverlust zur Folge hat. Nun haben solche strahlenhärtenden Beschichtungen ein sehr geringes Lösungsvermögen, so daß die Zugabe bekannter entlüftender Substanzen (z. B. Siliconöle oder organisch modifizierte Siloxane) sehr leicht zu unerwünschten Trübungen, Verlaufsstörungen, Kratern oder Glanzreduzierung führt. Auch wird die Überlakkierbarkeit solcher Beschichtungen durch den Zusatz von siliconbasierenden Additiven in der Regel stark negativ beeinträchtigt, was Mehrschichtaufbauten deutlich erschwert oder gar verhindert. Der Zusatz von siliconbasierenden Additiven ist insbesondere bei Gießapplikationen unerwünscht, da ein Vorhangreißen in der Regel nicht vermieden werden kann. Probates Hilfsmittel der Anwender stellt heute u. a. der Zusatz geringer Mengen Methylethylketon oder Butylacetat dar, was jedoch dem Wunsch zuwiderläuft, emissionsarme - idealerweise emissionsfreie - Systeme zu formulieren. Vor der Bestrahlung müssen diese Lösemittel größtenteils aus dem Film entfernt sein.

Es besteht daher in der Praxis ein Bedarf an leicht einarbeitbaren, siliconfreien Zusatzstoffen, die - in geringen Konzentrationen zugesetzt - die mikrodisperse Luft eliminieren oder deren Entstehen unterdrücken, ohne daß andere Eigenschaften der Beschichtung (Glanz, Überlackierbarkeit, Zwischenlagenhaftung, Beständigkeit gegenüber Lösemitteln und Wasser) negativ beeinflußt werden. Dabei sollen derartige Zusatzmittel von der Art und Zusammensetzung der Beschichtungen, denen sie zur Verbesserung der vorgenannten Eigenschaften zugesetzt werden, weitgehend unabhängig und somit universell anwendbar sein.

Der Erfindung liegt nun die Aufgabe zugrunde, Verbindungen zu finden, die diese vorgenannten Anforderungen erfüllen und in geringer Zusatzmenge wirksam sind.

Diese Aufgabe wird erfindungsgemäß gelöst durch die Verwendung von Polyacrylsäureestern eines mittleren Molekulargewichtes von 1000 bis 10000 der allgemeinen Formel 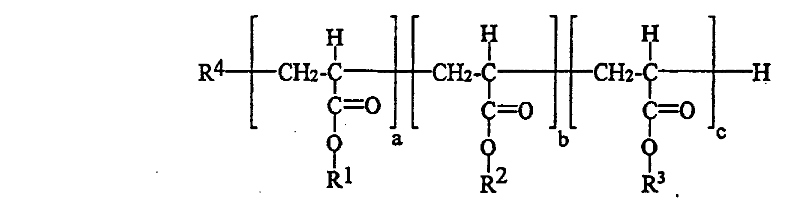 wobei
- R⁴: der Rest eines an sich bekannten Kettenreglers oder Initiators ist,
- R¹: gleich oder verschieden ist und einen Alkylrest mit 1 bis 4 Kohlenstoffatomen darstellt,
- R²: gleich oder verschieden ist und einen gesättigten oder ungesättigten Alkylrest mit 12 bis 22 Kohlenstoffatomen darstellt,
- R³: ein mindestens eine (Meth)acryloxygruppe tragender Kohlenwasserstoffrest ist,

- a: 10 bis 50,
- b: 3 bis 20,
- c: 0 bis 10 ist,
und wobei das Verhältnis a:b+c 0,25 bis 4 beträgt und das Verhältnis b:c 1:0 bis 1:0,7 beträgt.

Dem Stand der Technik entsprechend sind derartige Verbindungen über Copolymerisationen und/oder sich anschließende Umesterungsreaktionen erhältlich. Die jeweilige Syntheseroute richtet sich zum einen nach wirtschaftlichen Gesichtspunkten, zum anderen sind aber gerade zur Erreichung von engverteilten Polymeren, im Falle des gewünschten Einbaus vernetzungsfähiger (Meth)acryloxyfunktionen sowie zur Minimierung etwaiger Restmonomergehalte und hiermit verbundener physiologischer Risiken Umesterungsreaktionen an Polyacrylsäureestern mit 1 bis 4 Kohlenstoffatomen von Vorteil.

Derartige Umesterungsprodukte sind in jüngster zeit mehrfach beschrieben worden, wie z.B. in der DE-C-38 42 201 oder DE-C- 38 42 202 sowie in DE-C-42 36 337. Diese Umesterungsprodukte haben gegenüber den analogen Copolymerisaten wesentliche Vorteile, wie z.B. eine wesentlich einheitlichere Molekulargewichtsverteilung. Sie sind weitgehend frei von monomeren Anteilen. Durch das Umesterungsverfahren gelingt überhaupt erst die Herstellung von Polyacrylaten, deren alkoholische Esterkomponente auch ungesättigte Doppelbindungen aufweist, ohne Bildung von höhermolekularen Nebenprodukten. So ist es ohne weiteres möglich, Polyacrylsäureester mit Oleylalkohol und gleichzeitig mit weiteren Hydroxylgruppen aufweisenden Verbindungen umzuestern.

Überraschenderweise wurde nun auch gefunden, daß dies auch für hydroxyfunktionelle (Meth)acrylate gilt. Sie werden vorzugsweise über polymeranaloge Umesterunsgreaktionen an Polyacryisäureestern mit 1 bis 4 Kohlenstoffatomen erhalten.

Die Umesterung wird dabei jeweils ausgeführt an Polyacrylsäureestern, deren Alkylgruppen 1 bis 4 Kohlenstoffatome aufweisen. Besonders bevorzugt ist als Alkylgruppe die Methylgruppe. Die Auswahl der Alkylgruppe geschieht in erster Linie im Hinblick auf den Siedepunkt der entsprechenden Alkohole.

Bei den erfindungsgemäß zu verwendenden Polyacrylaten werden dann als Umesterungskomponente a) gesättigte oder ungesättigte Alkohole mit 12 bis 22 Kohlenstoffatomen verwendet. In Frage kommen insbesondere die von den natürlich vorkommenden Fettsäuren durch Hydrierung abgeleiteten gesättigten Fettalkohole wie Laurylalkohol, Myristylalkohol, Palmitylalkohol, Stearylalkohol oder Behenylalkohol. Von besonderem Interesse sind jedoch die ungesättigten Alkohole, insbesondere Oleylalkohol, bei dessen Verwendung als Umesterungskomponente besonders wirksame Entlüfter erhalten werden. Im Falle einer Copolymerisation ist als Monomer die Verwendung von Oleylacrylat bevorzugt.

Die Umesterungskomponente b) kann zusätzlich zur Umesterung eingesetzt werden, jedoch ist deren Einsatz fakultativ und nicht zwingend erforderlich. Die Verwendung ist jedoch insbesondere dann vorteilhaft, wenn eine Mitvernetzung des Additives angestrebt wird. Als Komponente b) kommen alle hydroxyfunktionellen (Meth)acrylate in Frage, insbesondere Hydroxyethylacrylat.

Bei den Formulierern strahlenhärtender Systeme wird der Wunsch nach einem möglichst großen Anteil vernetzbarer Komponenten in der Formulierung immer lauter. Die Verwendung (meth)acrylierter und somit vernetzbarer Polyacrylsäureester minimiert deren Migrationsneigung und den Anteil extrahierbarer Substanzen aus dem Film. Daher ist deren Verwendung besonders bevorzugt.

Das molare Verhältnis der Alkohole R²OH und R³OH beträgt 1:0 bis 1:0,7, insbesondere 1:0,1 bis 1:0,5.

Die Umesterung wird mit solchen Mengen an Komponenten R²OH und R³OH durchgeführt, daß ein Umesterungsgrad von 25 bis 80 % erreicht wird. Bevorzugt ist ein Umesterungsgrad von 50 bis 80 %.

Die Umesterung verläuft in aus den obengenannten Patentund Offenlegungsschriften an sich bekannter Weise bei Temperaturen von 70 bis 140°C in Gegenwart eines Umesterungskatalysators und gegebenenfalls in Gegenwart eines Lösungsmittels.

Die erfindungsgemäß zu verwendenden Entlüfter werden den Lacken und Farben in einer Menge von etwa 0,01 bis 5 Gew.-%, vorzugsweise 0,1 bis 1 Gew.-% bezogen auf die Gesamtformulierung zugesetzt.

Die erfindungsgemäß zu verwendenden Polyacrylsäureester können als solche oder in Lösemitteln, insbesondere Reaktivverdünnern, gelöst eingesetzt werden. Zur Erhöhung der Wirksamkeit ist dem Stand der Technik entsprechend die weitere Compoundierung mit hydrophoben anorganischen oder organischen Feststoffen vorteilhaft. Besonders bevorzugt ist die Verwendung hydrophober Kieselsäure. Diese Feststoffe können in Mengen von 0 bis 10 Gew.-% in die erfindungsgemäß zu verwendenden Polyacrylsäureester eindispergiert werden.

Insbesondere werden die erfindungsgemäßen Polyacrylsäure-ester, wie sie in Anspruch 1 definiert sind, in strahlenhärtenden Beschichtungen eingesetzt. Solche strahlenhärtenden Beschichtungen auf Basis von Polyetheracrylaten, Polyesteracrylaten, Epoxidacrylaten oder Polyurethanacrylaten oder Mischungen derselben können Zusatzstoffe (Pigmente, Füllstoffe, Verlaufmittel etc.) enthalten, wie sie auf dem Lacksektor üblich sind. Die gewünschte Applikationsviskosität der mit den erfindungsgemäßen Verbindungen hergestellten Beschichtungen kann durch entsprechende Regelung des Zusatzes von reaktiven und/oder nichtreaktiven Lösemitteln eingestellt werden. Diese Beschichtungsmittel sind für Überzüge geeignet, die auf einer Vielzahl von Substraten haften, wie beispielsweise Holz, Kunststoff oder Papier. Diese Beschichtungen können in üblicher Weise appliziert werden, beispielsweise durch Spritzen, Gießen oder Walzen.

In den folgenden Beispielen wird zunächst die nichterfindungsgemäße Herstellung der erfindungsgemäß zu verwendenden Verbindungen gezeigt. Es folgen anwendungstechnische Beispiele zum Nachweis der Eigenschaften der erfindungsgemäß zu verwendenden Verbindungen.

### Herstellungsbeispiele:

### Synthese der erfindungsgemäßen und nichterfindungsgemäßen Verbindungen

### Beispiel 1 A

### Herstellung von Polymethylacrylat durch radikalische Polymerisation (nicht erfindungsgemäß):

In einem Reaktor werden 180 g Toluol unter einer Stickstoffatmosphäre auf 100 °C erwärmt. Eine Lösung aus 4,7 g Azodiisobuttersäurenitril, 202,4 g n-Dodecylmercaptan (1 Mol) und 1378 g (ca. 16 Mol) Methylacrylat in 170 g Toluol wird innerhalb von 3 Stunden bei 100 °C mit konstanter Geschwindigkeit zugetropft. Nach Beendigung der Reaktion wird durch Zugabe von 3,2 g Azodiisobuttersäurenitril innerhalb von 1 Stunde nachinitiiert und anschließend läßt man noch eine Stunde nachreagieren. Restmonomere und Lösungsmittel werden bei 150 °C im Ölpumpenvakuum (1 Torr) entfernt und das klare, viskose Produkt durch Zugabe von Toluol auf einen Festkörpergehalt von 80 % verdünnt. Aus der gelchromatographischen Untersuchung ergibt sich für das erhaltene Polymerisat ein numerisches Molekulargewicht Mn-Wert (Eichung gegen PMMA/THF) von 1848 und für das Gewichtsmittel ein Mw-Wert von 3101 bei einem Mw/Mn Verhältnis von 1,68. Der Restmonomerengehalt ist < 0,1 %.

### Beispiele 2 A und 3 A

### Herstellung von Polybutylacrylaten mit unterschiedlichen Molekulargewichten durch radikalische Polymerisation (nicht erfindungsgemäß):

Es wird grundsätzlich wie in Beispiel 1 A verfahren mit dem Unterschied, daß, wie aus Tabelle 1 hervorgeht, die Menge an n-Dodecylmercaptan, das Monomer (Butylacrylat anstelle von Methylacrylat) und die Initiatormenge variieren.

**Tabelle 1**

| Polybutylacrylat Beisp.Nr. | Butylacrylat [g]/[Mol] | n-Dodecylmercaptan [g] | Initiatormenge [g] | Molekulargewicht (GPC) Mn | Uneinheitlichkeitsfaktor |
|---|---|---|---|---|---|
| | | | | | |
| 2 A | 1410/11,0 | 67,0 | 7,3 | 5060 | 1,67 |
| 3 A | 1743/13,6 | 40,5 | 8,9 | 9845 | 1,78 |

### Beispiel 1

193,3 g des aus Beispiel 1 A erhaltenen Polymethylacrylat werden auf 100 °C erwärmt und das Lösungsmittel bei 1 Torr Vakuum abdestilliert.

Das Polymethylacrylat wird auf 60 °C abgekühlt , 187,9 g (0,7 mol) Oleylalkohol und 3,92 g Dibutylzinnoxid als Umesterungskatalysator zugegeben und unter Vakuum (15 Torr) auf 120 °C erwärmt. Das bei der Umesterung entstehende Methanol wird destillativ entfernt.

Nach 4 Stunden Reaktionszeit und Erreichen der entsprechenden Destillatmenge (22 g) ist die erste Stufe der Reaktion beendet.

Das Reaktionsgemisch wird auf 100°C abgekühlt und 46,4 g (0,4 mol) Hydroxyethylacrylat und 0,039 g Methylhydrochinon als Inhibitor zugegeben. Das entstehende Methanol wird unter Vakuum (60 Torr) bei 50 °C 6 Stunden lang destillativ entfernt.

Anschließend wird das Vakuum auf 1 Torr erhöht und nicht umgesetztes Hydroxyethylacrylat abdestilliert. Der Umsatz der zweiten Stufe der Reaktion ergibt sich aus den entsprechenden Destillatmengen.

Durch ¹H - NMR und GC ergab sich ein Umsatz von >99 % an Oleylalkohol und ein Umsatz von 50 % an Hydroxyethylacrylat (HEA).

In der Tabelle 2 A werden weitere Einwaagen und Umsatzbetrachtungen von nicht erfindungsgemäß und erfindungsgemäß zu verwendenden Produkten aufgeführt. Die Durchführung der Reaktion erfolgte grundsätzlich analog zu Beispiel 1.

**Tabelle 2 A**

| Beisp. Nr. | Polymerisat | Alkanol | Hydroxy (Meth)acrylat | Katalysator | Inhibitor | Umsatz Alkanol | Umsatz (Meth)acrylat |
|---|---|---|---|---|---|---|---|
| 1 | 193,3 g PMA | 187,9 g OLA | 46,4 g HEA | 3,92 g DBTO | 0,039 g MeHQ | >99 % | 50 % |
| 2 | 193,3 g PMA | 275,5 g OLA | 104,4 g HEA | 5,38 g DBTO | 0,054 g MeHQ | 98,80 % | 49,20 % |
| 3 | 193,3 g PMA | 214,4 g OLA | 69,6 g HEA | 4,42 g DBTO | 0,044 g MeHQ | 99 % | 50,50 % |
| 4 | 193,3 g PMA | 189,0 g STA | - | 3,93 g DBTO | - | >99% | - |
| 5 | 184,7 g PBA | 125,1 g OLA | 38,7 g HEA | 3,11 g DBTO | 0,031 g MeHQ | 98 % | 48,90 % |
| 6 | 193,3 g PMA | 275,5 g OLA | 104,4 g HEA | 5,38 g DBTO | 0,054 g MeHQ | >99 % | 49,40 % |
| 1 A | siehe Beispiel 1 A | | | | | | |
| 8 | 193,3 g PMA | - | 69,6 g HEA | 2,27 g DBTO | 0,023 g MeHQ | - | 52 % |
| 9 | 193,3 g PMA | 53,6 g OLA | 23,2 g HEA | 2,31 g DBTO | 0,023 g MeHQ | >99% | 50 % |
| 10 | 139,4 g PBA | 100,5 g OLA | 23,2 g HEA | 2,35 g DBTO | 0,024 g MeHQ | 98 % | 49 % |

Die Abkürzungen bedeuten:
PMA = Polymethylacrylat
PBA = Polybutylacrylat
OLA = Oleylalkohol
STA = Stearylalkohol
DBTO = Dibutylzinnoxid
MeHQ = Methylhydrochinon
HEA = Hydroxyethylacrylat

Die eingesetzten erfindungsgemäßen (Beispiele 1-6) und nichterfindungsgemäßen (Beispiele 1 A, 8-10) copolymeren Polyacrylsäureester entsprechen der allgemeinen Formel 1:

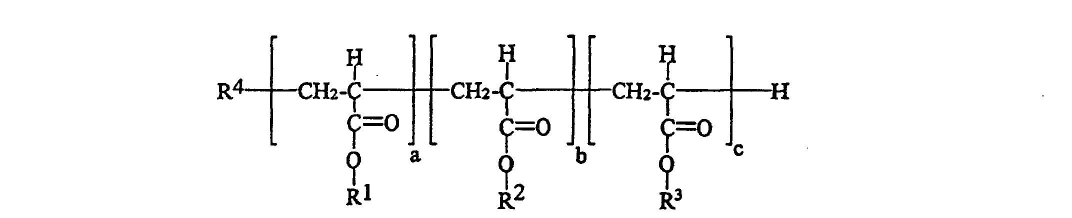

**Tabelle 2 B**

| Beisp. Nr. | R¹ | R² | R³ | a | b | c | Gew.-% Kieselsäure |
|---|---|---|---|---|---|---|---|
| 1 | Me | C₁₈H₃₅ | HEA | 7 | 7 | 2 | 0 |
| 2 | Me | C₁₈H₃₅ | HEA | 4 | 7,5 | 4,5 | 0 |
| 3 | Me | C₁₈H₃₅ | HEA | 5 | 8 | 3 | 0 |
| 4 | Me | C₁₈H₃₇ | - | 8 | 8 | 0 | 0 |
| 5 | Bu | C₁₈H₃₅ | HEA | 14 | 14 | 5 | 0 |
| 6 | Me | C₁₈H₃₅ | HEA | 4 | 7,5 | 4,5 | 5 |
| | | | | | | | |
| 1 A | Me | - | - | 16 | - | - | 0 |
| 8 | Me | - | HEA | 13 | - | 3 | 0 |
| 9 | Me | C₁₈H₃₅ | HEA | 13 | 2 | 1 | 0 |
| 10 | Bu | C₁₈H₃₇ | HEA | 30 | 30 | 8 | 0 |

Die Abkürzungen bedeuten:
Me = Methyl,
Bu = Butyl und
HEA = Hydroxyethylacrylat.

Das erfindungsgemäße Beispiel 6 resultiert aus Beispiel 2 dadurch, daß das Copolymer mit 5 Gew.-% einer hydrophoben Kieselsäure (Aerosil R812, Fa. Degussa) gefüllt wird. Die Einarbeitung erfolgt 30 Minuten mittels eines Dissolvers (1000 U/min).

Im folgenden werden die anwendungstechnischen Eigenschaften der verschiedenen erfindungsgemäß zu verwendenden Verbindungen 1 bis 6 sowie der Vergleichsbeispiele 1 A und 8 bis 10 gezeigt.

Zur Überprüfung der anwendungstechnischen Eigenschaften werden die folgenden Rezepturen strahlenhärtender Holzbeschichtungen ausgewählt, wobei sich die Rezepturen auf Gew.-% beziehen:

### Prüfsysteme

| Klarlack 1: | | |
|---|---|---|
| Laromer PO 84 F | 95,0 | Polyetheracrylat, BASF |
| Irgacure 500 | 3,0 | Photoinitiator, Ciba-Geigy |
| Ebecryl P115 | 1,5 | Amin-Synergist, UCB |
| Additiv | 0,5 | |
| | 100,0 | |

| Klarlack 2: | | |
|---|---|---|
| Laromer 8863 | 87,3 | Polyetheracrylat, BASF |
| Benzophenon | 3,5 | |
| Darocur 1173 | 5,2 | Photoinitiator, Ciba-Geigy |
| Ebecryl P115 | 3,5 | Amin-Synergist, UCB |
| Additiv | 0,5 | |
| | 100,0 | |

| Klarlack 3: | | |
|---|---|---|
| Laromer PE 55F | 40,0 | Polyesteracrylat, BASF |
| OTA 480 | 20,0 | Oligomer, UCB |
| TPGDA | 35,0 | Reaktivverdünner, BASF |
| Irgacure 500 | 3,0 | Photoinitiator, Ciba-Geigy |
| Ebecryl P115 | 1,5 | Amin-Synergist, UCB |
| Additiv | 0,5 | |
| | 100,0 | |

Die strahlenhärtenden Lackformulierungen werden auf übliche Weise gemäß den vorherstehenden Rezepturen formuliert. Als letzter Rezepturbestandteil werden jeweils die Additive (0,5 Gew.-%) zugegeben, wobei die Einarbeitung mittels eines Dissolvers erfolgt.

### Entlüftungstest 1

Die beschriebenen Lacke werden durch Spritzauftrag mit einer Fließbecherpistole (Düse 1,7 mm/Spritzdruck ca. 3,5 bar) einschichtig oder zweischichtig mit Zwischenschliff auf dunkel gebeizte Holzbrettchen appliziert (resultierende Schichtdicke ca. 100 µm) und mittels einer UV-Anlage mit Hg-Lampe gehärtet. Die Menge eingeschlossener feinverteilter Luft sowie großer Luftblasen wird visuell beurteilt und mittels einer empirischen Skala von 1 (blasenfrei) bis 4 (Blindwert) bewertet. Wichtiges Hilfsmittel zur Auswertung sind mikroskopische Aufnahmen.

### Entlüftungstest 2

Alle Klarlacke werden 1 Minute mit kleiner Scheibe am Dissolver gerührt, anschließend 1 Minute auf einer schräg gestellten Glasplatte abgegossen und sodann strahlengehärtet (120 W, 15 m/min). Die Menge eingeschlossener feinverteilter Luft sowie großer Luftblasen wird visuell beurteilt und mittels einer empirischen Skala von 1 (blasenfrei) bis 4 (Blindwert) bewertet. Auch hier dienen mikroskopische Aufnahmen als wichtiges Hilfsmittel.

### Glanzmessung

Der Glanzgrad (entsprechend DIN 67530) der gehärteten Filme wird durch Messung im 60°-Winkel mit einem Glanzmeßgerät haze-gloss der Fa. Byk-Gardner bestimmt. Ein hohes Ausmaß an stabilisierten Kugelblasen geht immer mit einer Reduktion des Glanzwertes einher.

### Zahl der Filmdefekte/Krater

Die Zahl der Filmdefekte wird visuell im Vergleich zu Standard-Mustern beurteilt; dabei entspricht die Beurteilung 1 kraterfreier Fläche und die Beurteilung 4 völlig gestörtem Film ohne kraterfreie Teilbereiche.

### Prüfung auf Beständigkeit

Die Prüfung auf Filmbeständigkeit erfolgt in Anlehnung an die DIN 68861 für Möbeloberflächen z. B. mit Wasser, Ethanol und Aceton im Vergleich zur Lackformulierung ohne Additiv.

### überlackierbarkeit

Die Zwischenlagenhaftung nach Überlackieren wird durch Gitterschnitt (entsprechend DIN 53151) mit Tesa-Abriß an zweischichtigen Probe-Hölzern beurteilt.

Ergebnisse in Klarlack 1:

| Beisp. Nummer | Entlüftungstest 1: Makro-/Mikroblasen | Entlüftungstest 2: Makro-/ Mikroschaum | Glanzgrad | Filmdefekte | Beständigkeit | Überlackierbarkeit |
|---|---|---|---|---|---|---|
| Blind | 4/3 | 4/4 | 77 | 2 | i.O. | i.O. |
| 1 | 1/1 | 1/1 | 88 | 1 | i.O. | i.O. |
| 2 | 1/1 | 2/1 | 86 | 1 | i.O. | i.O. |
| 3 | 1/2 | 1/2 | 85 | 1 | i.O. | i.O. |
| 4 | 1/1 | 1/2 | 86 | 1 | i.O. | i.O. |
| 5 | 2/2 | 2/2 | 84 | 1 | i.O. | i.O. |
| 6 | 1/1 | 1/1 | 87 | 1 | i.O. | i.O. |
| | | | | | | |
| 1 A | 4/4 | 4/4 | 80 | 1 | i.O. | i.O. |
| 8 | 4/3 | 4/3 | 79 | 1 | i.O. | i.O. |
| 9 | 3/3 | 3/3 | 79 | 1 | i.O. | i.O. |
| 10 | 2/3 | 2/3 | 73 | 3 | i.O. | i.O. |

Ergebnisse in Klarlack 2:

| Beisp. Nummer | Entlüftungstest 2 | Mikroschaum | Glanzgrad | Filmdefekte | Beständigkeit | Überlackierbarkeit |
|---|---|---|---|---|---|---|
| Blind | 4 | 4 | 75 | 2 | i.O. | i.O. |
| 1 | 1 | 1 | 81 | 1 | i.O. | i.O. |
| 2 | 1 | 1 | 81 | 1 | i.O. | i.O. |
| 3 | 1 | 2 | 80 | 1 | i.O. | i.O. |
| 4 | 1 | 2 | 81 | 1 | i.O. | i.O. |
| 5 | 2 | 2 | 82 | 1 | i.O. | i.O. |
| 6 | 1 | 1 | 81 | 1 | i.O. | i.O. |
| | | | | | | |
| 1 A | 4 | 4 | 74 | 1 | i.O. | i.O. |
| 8 | 4 | 3 | 75 | 1 | i.O. | i.O. |
| 9 | 3 | 3 | 76 | 1 | i.O. | i.O. |
| 10 | 2 | 3 | 73 | 3 | i.O. | i.O. |

Ergebnisse in Klarlack 3:

| Beisp. Nummer | Entlüftung stest 2 | Mikroschaum | Glanz grad | Film-defekte | Beständigkeit | Überlackierbarkeit |
|---|---|---|---|---|---|---|
| Blind | 4 | 4 | 70 | 2 | i.O. | i.O. |
| 1 | 1 | 1 | 78 | 1 | i.O. | i.O. |
| 2 | 1 | 1 | 79 | 1 | i.O. | i.O. |
| 3 | 1 | 2 | 80 | 1 | i.O. | i.O. |
| 4 | 1 | 2 | 77 | 1 | i.O. | i.O. |
| 5 | 2 | 2 | 76 | 1 | i.O. | i.O. |
| 6 | 1 | 1 | 77 | 1 | i.O. | i.O. |
| | | | | | | |
| 1A | 4 | 4 | 71 | 1 | i.O. | i.O. |
| 8 | 4 | 3 | 70 | 1 | i.O. | i.O. |
| 9 | 3 | 3 | 72 | 1 | i.O. | i.O. |
| 10 | 2 | 3 | 69 | 3 | i.O. | i.O. |

Alle erfindungsgemäßen additivierten Klarlacke sind zudem via Walzauftrag als auch auf einer Gießmaschine ohne Probleme - insbesondere beim Gießen ohne Vorhangreißen - verarbeitet worden.

Wie aus den vorherstehenden Tabellen ersichtlich ist, zeichnen sich die erfindungsgemäß zu verwendenden Verbindungen durch ihre universelle Anwendbarkeit aus. Wie sich aus den Vergleichsbeispielen ergibt, sind die Indices a, b und c sowie deren Verhältnis maßgeblich für die Tatsache, daß die erfindungsgemäßen Polyacrylsäureester den Makround Mikroschaum unterdrücken, ohne daß andere Beschichtungseigenschaften nachteilig beeinflußt werden.

## Patentansprüche

1. Polyacrylsäureester eines mittleren Molekulargewichtes von 1000 bis 10000 der allgemeinen Formel 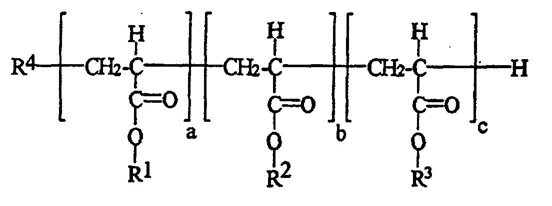 wobei
R⁴ der Rest eines an sich bekannten Kettenreglers oder Initiators ist,
R¹ gleich oder verschieden ist und einen Alkylrest mit 1 bis 4 Kohlenstoffatomen darstellt,
R² gleich oder verschieden ist und einen gesättigten oder ungesättigten Alkylrest mit 12 bis 22 Kohlenstoffatomen darstellt,
R³ ein mindestens eine (Meth)acryloxygruppe tragender Kohlenwasserstoffrest ist,
a 10 bis 50,
b 3 bis 20,
c 1 bis 10 ist,
und wobei das Verhältnis a:b+c 0,25 bis 4 beträgt und das Verhältnis b:c 1:0.05 bis 1:0,7 beträgt.

2. Polyacrylsäureester gemäß Anspruch 1 **dadurch gekennzeichnet, daß** R¹ ein Methylrest ist.

3. Polyacrylsäureester gemäß Anspruch 1 oder 2 **dadurch gekennzeichnet, daß** R² ein Oleylrest ist.

4. Polyacrylsäureester gemäß Anspruch 1, 2 oder 3 **dadurch gekennzeichnet, daß** R³ ein Ethyl- oder Propylacrylatrest ist.

5. Verwendung von Polyacrylsäureestern eines mittleren Molekulargewichtes von 1000 bis 10000 der allgemeinen Formel 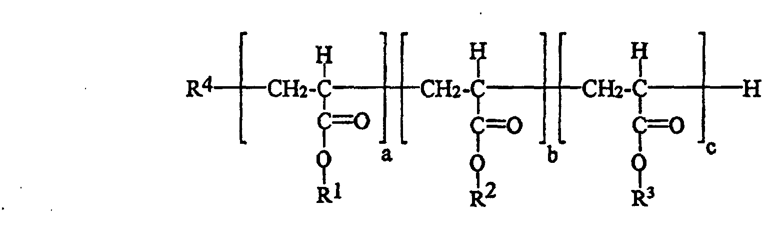 wobei
R⁴ der Rest eines an sich bekannten Kettenreglers oder Initiators ist,
R¹ gleich oder verschieden ist und einen Alkylrest mit 1 bis 4 Kohlenstoffatomen darstellt,
R² gleich oder verschieden ist und einen gesättigten oder ungesättigten Alkylrest mit 12 bis 22 Kohlenstoffatomen darstellt,
R³ ein mindestens eine (Meth)acryloxygruppe tragender Kohlenwasserstoffrest ist,
a 10 bis 50,
b 3 bis 20,
c 0 bis 10 ist,
und wobei das Verhältnis a:b+c 0,25 bis 4 beträgt und das Verhältnis b:c 1:0 bis 1:0,7 beträgt,
als Entlüfter für Lacke und Farben, insbesondere für strahlenhärtende (UV/EB) Lacke und Farben.

6. Verwendung von Polyacrylsäureestern gemäß Anspruch 5 **dadurch gekennzeichnet, daß** c = 1 bis 10 und das Verhältnis b:c 1:0,1 bis 1:0,5 beträgt, als Entlüfter für strahlenhärtende (UV/EB) Lacke und Farben.

7. Verwendung von Polyacrylsäureestern gemäß Anspruch 5 oder 6 **dadurch gekennzeichnet, daß** 0,01 bis 5,0 Gew.-% (bezogen auf Gesamtformulierung) der Polyacrylsäureester verwendet werden.

## Claims

1. A polyacrylate having an average molecular weight of from 1000 to 10,000 and the general formula 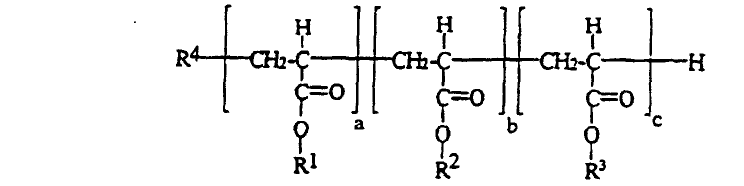 where
R⁴ is the radical of a known chain regulator or initiator,
R¹ is identical or different and is an alkyl radical of 1 to 4 carbon atoms,
R² is identical or different and is a saturated or unsaturated alkyl radical of 12 to 22 carbon atoms,
R³ is a hydrocarbon radical which carries at least one (meth)acryloxy group,
a is from 10 to 50,
b is from 3 to 20,
c is from 1 to 10,
and the ratio a:b+c is from 0.25 to 4 and the ratio b:c is from 1:0.05 to 1:0.7.

2. A polyacrylate as claimed in claim 1, wherein R¹ is a methyl radical.

3. A polyacrylate as claimed in claim 1 or 2, wherein R² is an oleyl radical.

4. A polyacrylate as claimed in claim 1, 2 or 3, wherein R³is an ethyl or propyl acrylate radical.

5. The use of a polyacrylate having an average molecular weight of from 1000 to 10,000 and the general formula 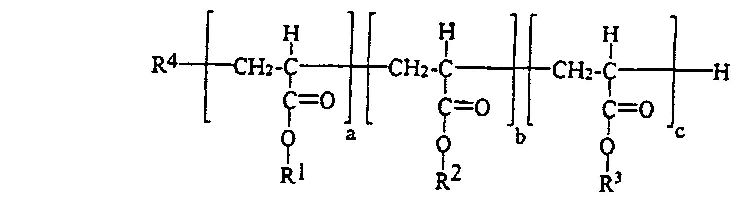 where
R⁴ is the radical of a known chain regulator or initiator,
R¹ is identical or different and is an alkyl radical of 1 to 4 carbon atoms,
R² is identical or different and is a saturated or unsaturated alkyl radical of 12 to 22 carbon atoms,
R³ is a hydrocarbon radical which carries at least one (meth)acryloxy group,
a is from 10 to 50,
b is from 3 to 20,
c is from 0 to 10,
and the ratio a:b+c is from 0.25 to 4 and the ratio b:c is from 1:0 to 1:0.7
as a degassing agent for paints and coatings, especially for radiation-curing (UV/EB) paints and coatings.

6. The use of a polyacrylate as claimed in claim 5, wherein c = 1 to 10 and the ratio b:c is from 1:0.1 to 1:0.5, as a degassing agent for radiation-curing (UV/EB) paints and coatings.

7. The use of a polyacrylate as claimed in claim 5 or 6, wherein from 0.01 to 5.0% by weight (based on the total formulation) of the polyacrylate is used.

## Revendications

1. Ester de poly(acide acrylique) présentant un poids moléculaire moyen de 1000 à 10000 de formule générale 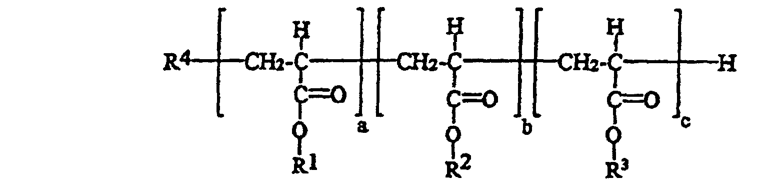 dans laquelle
R⁴ est un radical d'un agent de réglage de chaîne ou d'un initiateur connu en soi,
R¹ est identique ou différent et représente un radical alkyle comprenant 1 à 4 atomes de carbone,
R² est identique ou différent et représente un radical alkyle saturé ou insaturé comprenant 12 à 22 atomes de carbone,
R³ est un radical hydrocarboné portant au moins un groupement (méth)acryloxy,
a est égal à 10 à 50,
b est égal à 3 à 20,
c est égal à 1 à 10
et le rapport a:b+c est égal à 0,25 à 4 et le rapport b:c est égal à 1:0,05 à 1:0,7.

2. Ester de poly(acide acrylique) selon la revendication 1, **caractérisé en ce que** R¹ est un radical méthyle.

3. Ester de poly(acide acrylique) selon la revendication 1 ou 2, **caractérisé en ce que** R² est un radical oléyle.

4. Ester de poly(acide acrylique) selon la revendication 1, 2 ou 3, **caractérisé en ce que** R³ est un radical éthyle ou propylacrylate.

5. Utilisation d'esters de poly(acide acrylique) présentant un poids moléculaire moyen de 1000 à 10000 de formule générale 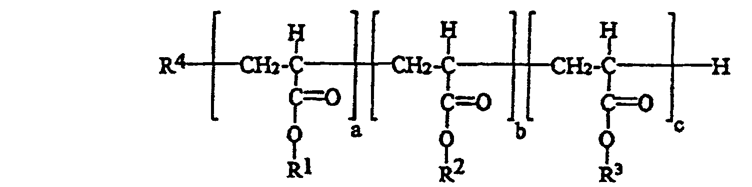 dans laquelle
R⁴ est un radical d'un agent de réglage de chaîne ou d'un initiateur connu en soi,
R¹ est identique ou différent et représente un radical alkyle comprenant 1 à 4 atomes de carbone,
R² est identique ou différent et représente un radical alkyle saturé ou insaturé comprenant 12 à 22 atomes de carbone,
R³ est un radical hydrocarboné portant au moins un groupement (méth)acryloxy,
a est égal à 10 à 50,
b est égal à 3 à 20,
c est égal à 0 à 10
et le rapport a:b+c est égal à 0,25 à 4 et le rapport b:c est égal à 1:0 à 1:0,7
comme agent de dégazage pour les laques et les peintures, en particulier pour les laques et les peintures durcissant sous l'effet de rayons (UV/EB).

6. Utilisation d'esters de poly(acide acrylique) selon la revendication 5, **caractérisée en ce que** c=1 à 10 et le rapport b:c est égal à 1:0,1 à 1:0,5, comme agent de dégazage pour les laques et les peintures durcissant sous l'effet de rayons (UV/EB).

7. Utilisation d'esters de poly(acide acrylique) selon la revendication 5 ou 6, **caractérisée en ce qu'**on utilise 0,01 à 5,0% en poids (par rapport à la formulation totale) des esters de poly(acide acrylique).
